# EUROPEAN PATENT APPLICATION

(11) **EP 0 961 190 A1**
(43) Date of publication of application: **01.12.1999**
(21) Application number: 99304139.1
(22) Date of filing: 27.05.1999
(51) Int. Cl.: G05D 11/13, B67D 5/56

(54) **Fuel blending apparatus using octane levels**

(30) Priority: 29.05.1998 US 87425; 29.05.1998 US 87030; 29.05.1998 US 87287
(71) Applicant: GILBARCO INC., Greensboro North Carolina 27420 (US)
(72) Inventor: Nanaji, Seifollah S., Greensboro, North Carolina 27409 (US); Terranova, Steven N., Durham, North Carolina 27713 (US); KAEHLER David L., Greensboro, Guilford, North Carolina (US); Mc SPADDEN John S., Greensboro, Guilford, North Carolina (US)
(74) Representative: Fitchett, Stuart Paul

(57) **Abstract**

The present invention relates to fuel dispensing apparatus and includes: first and second fuel sources (100, 200) of different octane levels; at least one octane level sensor (104, 204, 310, 312, 341) for detecting either the octane level of the fuel sources or of a blend produced from the sources; a blending system (300); and a controller (400) for controlling the blending system (300) in dependence on the octane level sensed by the octane level sensor. The invention enables more accurate blending to be obtained, or can be used to prevent incorrect octane levels of fuel being dispensed.

## Description

The present invention relates generally to dispensing systems for delivering a desired blend of two or more products to a user. More particularly, the invention relates to monitoring the octane levels in a blending process to ensure that a properly blended product is produced. The invention is applicable to systems employing fuel dispensers (which receive a pressurised fuel supply) or fuel pumps (which have pumps located in the housing) and both will be referred to for the purposes of this specification as dispensers.

Numerous systems have been disclosed for blending two or more fluids during the dispensing of a fluid product. Such systems are used quite often in a service station environment where it is desired to dispense a plurality of different grades or octane levels of gasoline products by blending a high octane level product with a low octane level product to create one or more mid-level octane products. Blending systems offer the potential for savings stemming from reduced storage capacity requirements both at the service station and the bulk plant level. One example of such a system is that disclosed in U.S. Patent No. 4,876,653 ("the '653 patent") assigned to Gilbarco, Inc., the contents of which are incorporated herein by reference. The '653 patent discloses a system for blending low and high octane gasoline with the fuel flow rate in each of two fuel flow paths being under individual closed loop control. The system includes an algorithm for comparing the ratio of the actual accumulated volumes of the low octane to the high octane fuel relative to a statistically determined ratio of the ideal volume of the low to high octane fuel for the total accumulated volume of the sum of the volumes of the fuels at a given time. The system provides a very exact blend relative to a preselected blend ratio.

Each of the previous systems in this area, including that disclosed in the '653 patent, are based on an important underlying assumption: that the octane levels in the low and high octane fuel storage tanks are correct. Typically, it is assumed that the low octane blend component has an octane of about 86 to 87 and that the high octane component has an octane level of about 92 to 93. Given the octane variability inherent in the refining process, many oil companies add ½ to 1 point of octane to each of the blending components to ensure that each level of blended product meets or exceeds the posted octane rating. This extra octane is referred to as "octane give away" and can be quite costly. Thus, it would be desirable to eliminate the need to boost octane levels of the blending components to ensure that a proper blended product is provided to the customer.

Another potential problem with current octane blending systems is that they have no provision to detect the delivery of an incorrect octane level product in either the high or low level octane blending component storage tanks. That is, if a low octane product is dropped into both the low octane storage tank and to the high octane storage tank, it may not be possible to deliver a proper octane blend under any circumstances. Similarly, if a high octane product is delivered into the low octane product storage tank the station operator will lose an inordinate amount of money due to the "octane give away" occurring for both the blended and the low octane level products. Even if only a partial fuel delivery is dropped into the wrong tank, it may be impossible for a correctly blended product to be created. Thus, it would be desirable to provide a system for monitoring octane levels in blending component storage tanks to alert operators that blending component octane levels are outside desired limits and thus cannot be blended to meet posted octane levels.

With present blending dispenser designs there is also a requirement to employ two meters, one associated with each grade to be blended.

It is an object of the present invention to provide an improved apparatus for and method of, dispensing fuel.

According to a first aspect of the present invention there is provided fuel dispensing apparatus comprising: first and second fuel sources for first and second fuels of different octane levels; a blending system capable of combining first and second fuels to produce at least one blend and including flow control means for controlling the flow of the first fuel relative to the second fuel; one or more octane sensors for sensing the octane level of at least one of the first fuel, the second fuel or the blend; a controller in electronic communication with the blending system for receiving a signal indicative of the octane level detected by the at least one octane sensor and controlling the blending system in dependence thereon; and a fuel dispenser through which the at least one blend is dispensed.

By employing the present invention a true octane value can be used to control the blending system. Where the octane level relates to the fuel source, the blending system can determine whether a blend can be generated, and therefore permits or prevents a selected grade being dispensed or where the octane level relates to the blended fuel the blending system can be controlled such as to maintain the octane of a blend at a legal minimum.

In a preferred embodiment the apparatus comprises first and second octane level sensors for measuring first and second fuel octane levels and generating output signals indicative of the first and second fuel octane levels respectively; wherein the controller controls the dispensing of the at least one blend based on the measured octane levels of the first and second fuels.

In a preferred embodiment the blending system comprises a blend manifold and first and second values for controlling the flow of the first and second fuels to the blend manifold, the apparatus further comprising first and second meters for detecting the flow of the first and second fuels, and first and second real time octane level sensors for detecting the octane levels of the first and second fuels entering the blend manifold, wherein the controller controls the first and second valves in dependance on signals received from the first and second meters and said first and second real time octane sensors so as to maintain the blend at a predetermined level.

In an alternative embodiment the apparatus may comprise a blend octane sensor for detecting the octane level of the blend, which blend in a transaction may comprise a single fuel source if the desired octane level corresponds to the octane level of one of the fuel sources.

According to another aspect of the invention there is provided a method for controlling the dispensing of a low octane fuel and a high octane fuel to create at least one fuel grade, which can be a blend, the method comprising: a) determining the octane level of the low octane fuel source; b) determining the octane level of the high octane fuel source; c) comparing the octane levels determined in steps a) and b) to predetermined levels for each fuel source; and d) controlling the dispensing in dependance on the result of step c).

Step d) of the method may comprise the steps:
d1) determining which of the at least one fuel grade may be created using the results of comparison of step c); and
d2) permitting only the dispensing of each fuel grade that the result of comparison of step c) indicates may be created.

Alternatively the step d) may comprise the steps:
d1) providing the results of comparison of step c) to the fuel dispenser blending system; and
d2) modifying the operation of the blending system as needed depending on the results of step d1).

According to another aspect of the invention there is provided a method for blending fuel comprising the steps of: extracting first and second fuels from a first and second fuel source respectively; passing all fuel extracted from first and second fuel sources through a single meter; and passing all fuel extracted from the single meter through an octane sensor capable of generating a signal indicative of the octane level of a mixture of the first and second fuels; and controlling the amount of fuel from first and second fuel sources to maintain the mixture at a predetermined octane level.

Several embodiments of the present invention will now be described by way of example only with reference to the accompanying figures, of which:

FIGURE 1 is a block diagram illustrating the blending components necessary in the performance of more than one embodiment of the present invention showing high octane and low octane blending components, a blending dispenser and a site controller.

FIGURE 1A depicts an Electronic Tank Gauge that may be used with the present invention to receive signals carrying octane level information from fuel sources and to provide that information to either a dispenser controller or to a site controller to manage a fuel blending process.

FIGURE 2 is a flow chart illustrating the process steps using octane sensors in a low octane fuel and a high octane fuel for controlling the operation of a dispenser blending system.

FIGURE 3 is a flow chart illustrating an alternative embodiment of the present invention that determines whether a requested blended fuel can be produced or produced economically given the octane levels of the available blending components.

FIGURE 4 is a flow chart illustrating a first embodiment for controlling the blending process in a service station setting using one or more octane level sensors.

FIGURE 5 is a flow chart illustrating an alternative embodiment for controlling the blending process in a service station setting using one or more octane level sensors.

FIGURE 6 is a block diagram illustrating an embodiment of the invention employing a single meter.

Like numerals are used throughout the figures to indicate like components in alternative embodiments.

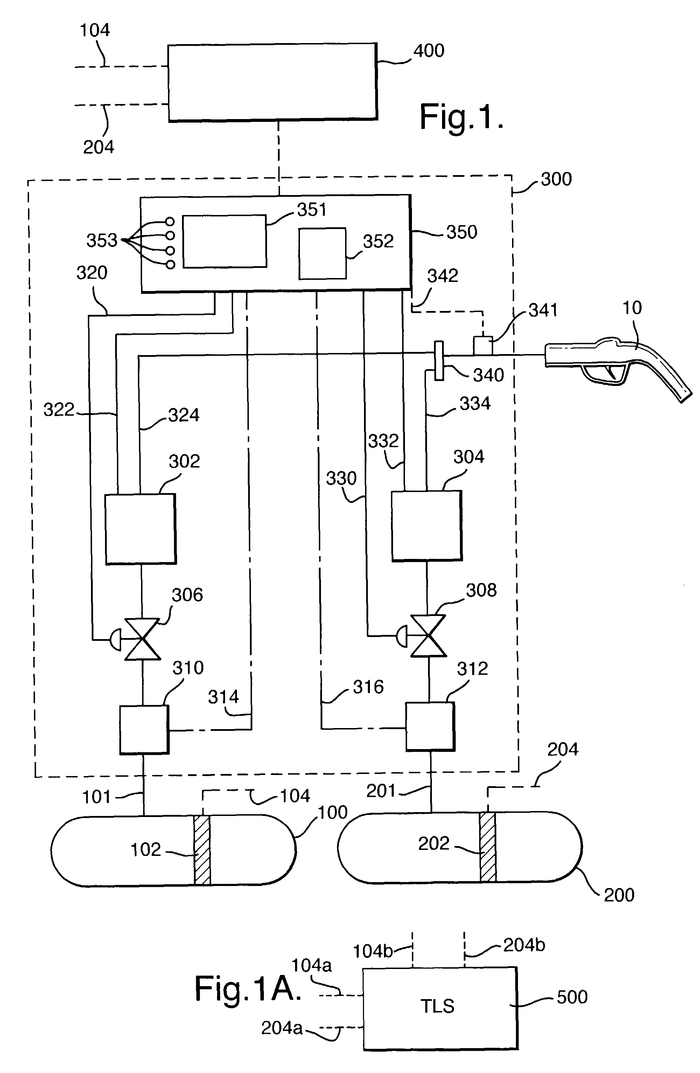

Preferred embodiments of the present invention are described below with reference to the components of the dispensing system illustrated in Figure 1. However as will become apparent not all the components shown are necessary to the performance of each embodiment.

The components shown in Fig. 1 includes low octane product fuel tank 100, high octane product fuel tank 200, fuel dispenser 300, and site controller 400 in electronic communication with fuel dispenser electronics 350. Site controller 400 provides means for operating personnel to monitor and control the operation of fuel dispenser 300 and the octane level in fuel tanks 100,200. It should be understood that although only one fuel dispenser 300 is shown in Fig. 1, a typical installation would include several dispensers each in fluid communication with fuel tanks 100,200 and in electronic communication with site controller 400, as is well known in the art.

Fuel dispenser 300 is in fluid communication with fuel tanks 100,200 via supply lines 101,201 and includes a customer display 351, an octane level display 352 and product blend selectors 353 for customer use to select the blended product desired for a particular transaction. Octane level display 352 provides a numeric readout of the octane level of the product being delivered to the customer and where this is available can be the actual detected octane level of the fuel being dispensed which may be a blend. The other components of fuel dispenser 300 include first and second flow control valves 306,308 for controlling the flow rate of first and second products, respectively; and first and second flow meters 302,304 connected to flow control valves 306,308 for providing electronic signals 322,332 to dispenser electronics 350 indicative of the flow rate of a first and second products, respectively. Product flow lines 324,334 provide a path for delivery of the first and second products to nozzle 10. As is well known in the art, nozzle 10 is connected to dispenser 300 via a flexible hose. First and second flow control valves 306,308 are controlled by dispenser electronics 350 via signal lines 320,330 respectively. Various other components such as fuel filters, check valves, solenoids and the like may also be provided as necessary.

In addition to the above all embodiments of the invention also employ octane sensors. Depending on the embodiment these may be "in tank" octane sensors 102,202 provided in fuel tanks 100,200 for measuring the octane levels of the low octane and the high octane blend components and generating an output signal indicative of those octane levels. The output signals are sent via lines 104,204 to either dispenser electronics 350 or to site controller 400. Alternatively, octane level information may be sent to both simultaneously.

In the above embodiment, the octane sensors 102, 202 determine the octane levels of the blend components in tanks 100, 200 and transmit signals indicative of those octane levels to either a site controller 400, to dispenser controller/electronics 350, or to some other device as described in more detail below. The sensor must be capable of performing this function fast enough to enable site controller 400 working with dispenser electronics 350 or dispenser electronics 350 functioning alone to correct a blending process continuously within the time span of a typical retail transaction. The sensor reaction time must also take into account the amount of time necessary for fuel to travel from tanks 100,200 to dispenser 300. Although "real time" octane sensors could be used for this purpose, less expensive octane sensors having slower reaction times are preferable for this preferred embodiment to achieve cost savings.

In an alternative embodiment of the invention the system will include first and second real time octane sensors 310,312 for providing signals 314,316 indicative of the octane level of first and second products respectively. Alternatively a single real time octane sensor 341 can be provided downstream of the blend manifold 340. Sensor 341 provides an output signal 342 to dispenser electronics 350 indicative of the octave level of the blended product being provided by the dispenser.

The term "real time octane sensor" as used herein means an octane sensing device capable of determining the octane level and transmitting a signal indicative of the octane level of a gasoline fluid to a dispenser controller or to some other device. The sensor must be capable of performing this function fast enough to enable the dispenser controller to correct a blending process continuously within the time span of a typical retail transaction..

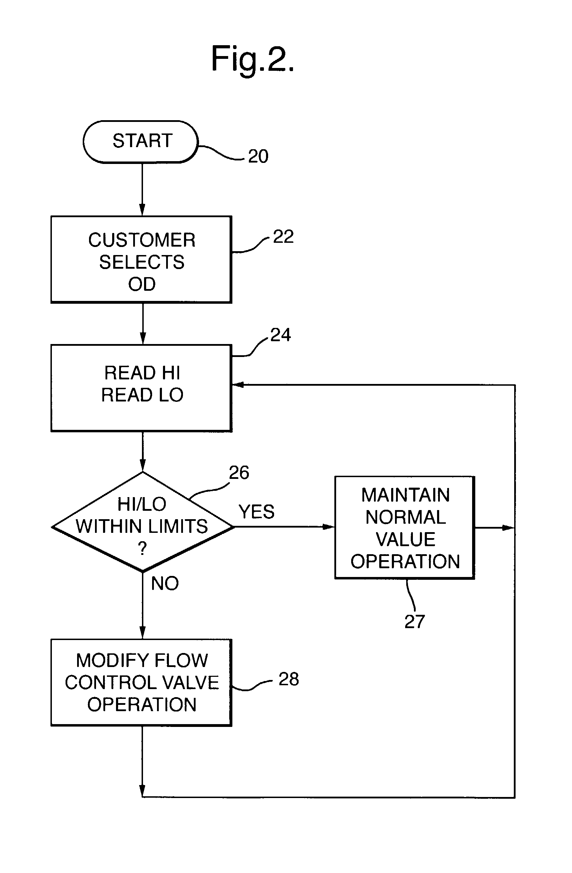

The flow chart shown in Fig. 2 illustrates a preferred embodiment of the present invention using in tank octane sensors in a fuel blending operation to incorporate the actual octane levels of the blending components into the blending process. The symbols used in the flow charts that follow are defined as follows:

"OD" refers to the octane level of the product requested by the customer. This product may be a low octane product or high octane product which normally require no blending or may be one or more mid-octane products which require blending.

"LO" and "HI" refer to the low octane blending component and the high octane blending component respectively.

Referring to Fig. 2, the blend control process is entered at 20 and proceeds to 22 where the customer selects the fuel and the octane level to be delivered. In this example, the mid-octane product has been selected. Next, as fuel delivery begins, the blending controller in dispenser electronics 350 (or site controller 400) reads the octane level of the high and low octane blend components 100,200 using the output signals from blend octane sensors 102 and 202. At test 26 the octane levels of the blending components are compared to predetermined limits for the components. It should be understood that at test 26 the blend component octane values need not be identical to a single set point to satisfy the test. There may be room for a small amount of variation while still satisfying the test due to instrument error and as may be allowed by regulatory authorities. For instance a nominal 87 octane product may be acceptable if the actual measured octane value varies by ½ to 1 point on either side of that value. The exact of amount of acceptable variance can be determined readily by a person of ordinary skill. It should be understood that this comparison step includes comparison of the measured octane level to not only a fixed target value, but also to a target range of values.

If test 26 answers "yes," then the routine proceeds to 27 where flow control valves 306,308 are left in their current positions. This means that no control signals are generated beyond those normally generated by the system disclosed in the '653 patent. The routine returns to 24 and the octane levels of the blend components are read again.

If test 26 answers no, then the routine proceeds to 28 where blend controller in dispenser electronics 350 controls flow control valves 306,308 to reduce/increase the amount of high octane or low octane blend component as necessary. This step amounts to changing the mixing ratios used for the blending components used to create the blended fuel. Either action may be used singly or in combination to correct the octane level of the blended product. This control step is accomplished based on the actual octane levels of the blend components and not based on an assumed octane level.

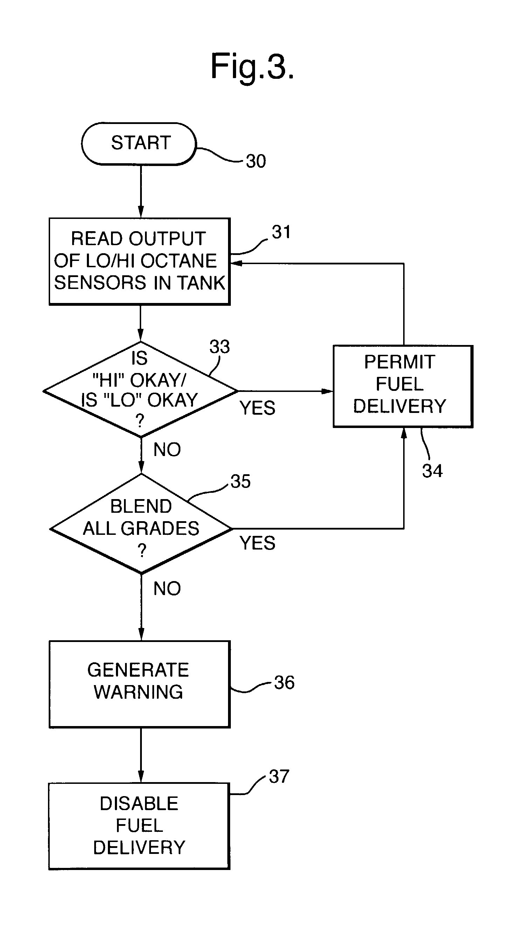

Another aspect of the blending system of the present invention involves checking blend component octane levels as detected by tank octane sensors 102, 202 before a fuel delivery commences, as illustrated in the flow chart in Fig. 3. For the purposes of this explanation it will be assumed that the system will use a low octane blending component and a high octane blending component to provide a low octane product, at least one mid-octane (intermediate) product and a high octane product. The mid-octane product is the result of some blend of the low and high octane blending components. Periodically, site controller 400 polls fuel sources 100,200 as indicated at 31 to determine the octane rating of the fuels stored therein. This polling may take place continuously or may be conducted only after a fuel delivery takes place. Next, at test 33 the actual octane level of the blending components is compared to predetermined minimums necessary for making the product requested by the customer.

If test 33 answers yes, i.e. octane levels reported by sensors 102,202 are at least the minimums required to create the blended product, then site controller will permit fuelling operations to take place 34. However, if the test 33 answers no, then test 35 asks whether all desired product grades can be blended with the blending components available. Alternatively, this test asks whether the product requested for a particular transaction is available. If test 35 answers yes, then fuelling is permitted, block 34. If test 35 answers no, then a warning to operators is generated 36 and, optionally, fuelling operations are disabled at step 37 for all products. Optionally, fuelling operations may be disabled only for those products that cannot be created using the octane levels available.

The "no" answer to test 35 will be referred to as an error condition. By way of nonlimiting example, there are three possible error conditions that could cause site controller to disable fuelling operations partially or completely. The first error condition occurs when the low octane blending component is at a proper minimum level but the high octane blending component is not at its minimum level. This error could be caused by dropping an incorrect grade of fuel in the underground tank for the high octane blending component. In this instance, a high octane product cannot be provided. However, a low octane product and possibly a mid-octane product may be delivered. The mid-octane product may be delivered if the product in the high octane blending component tank is still high enough to create the mid-octane product. Site controller 400 would indicate to operating personnel and also to customers via dispenser displays 351,352 that the high octane product is unavailable, that the low octane product is available and, possibly, that the mid-octane product is available.

In the second error condition the low octane blending component does not contain the minimum required octane level. Assuming that the high octane blending component is at its minimum level, then potentially all three products could be provided, however, some amount of high octane blending component must be blended with the unacceptable low octane blending component to create the low octane product. Also, the mid-octane product could be blended but will require more than the usual amount of the high octane blending component to reach the proper octane level. Although it is possible in this error condition to provide each of the final products, doing so is disadvantageous economically because an excessive amount of the costly high octane blending component will be required to blend the final products. In this instance, site controller 400 could shut down all fuelling operations and provide an audible/visible error signal to operating personnel. Alternatively, site controller 400 could allow fuelling operations to continue while providing the audible/visual warning signal to operators so that they may take corrective action.

The third error condition occurs when both the low octane and high octane blending components are below minimum octane levels. Here, it will be impossible to provide the high octane product. It may or may not be possible to provide the low octane product and/or the mid-octane product. Site controller 400 may disable all fuelling operations, providing notification to operating personnel and customers of the error condition, or may permit the blending and dispensing of those products which can be blended properly while providing notification of the error condition to operators. In the last instance, site controller 400 would show a message on customer display 352 that certain grades of product are unavailable.

Examples of these error conditions are further illustrated in Table 1 below. The table is based on a high octane blending component having 93 octane and a low octane blending component having 87 octane. The two components are blended to create an intermediate octane blended product having an octane level between 87 and 93. The blending dispenser will thus provide a high grade product (93 octane), a mid-grade product (between 87-93 octane) and a low grade product (87 octane). Table 1 shows which of these products can be provided based on the octane levels of the available blending components, and whether such blending possibly will be at an economic loss from the ideal.

**Table 1**

| | **High Octane Level** | **Low Octane Level** | **Possible Octane Levels** (Economic Loss) |
|---|---|---|---|
| Ideal | 93 | 87 | 87-93 |
| Error Cond. 1 | 87 | 87 | 87 only |
| Error Cond. 2 | 93 | 80 | 87-93 (But at a loss) |
| Error Cond. 3 | 90 | 87 | 87-90 only (But at a loss) |
| Error Cond. 4 | 86 | 86 | No product |
| Error Cond. 5 | 87 | 93 | 87-93 (But at a loss) |

It will be understood readily that blending components having other octane levels may be used and that one or more blended intermediate octane products having different octane levels may be produced. In each of these situations, the kinds of errors illustrated above could be encountered.

Other error scenarios could occur. However, each will include the steps of determining the octane levels of the blending components, comparing those octane levels to predetermined minimums, determining which of the desired fuel grades may be created using the results of the comparison step and then either permitting the dispensing of some or none of the final products. The products made available will depend on the limits created by the available octane levels and the acceptable economic losses incurred to blend all products. Preferably the measured octane levels will be used as reference points in determining proportions as blending occurs. It will be readily understood that the flexibility of currently available site controllers provide a number of performance options. A suitable controller for carrying out the practice of the present invention includes the G SITE™ series of site controllers available from Gilbarco, Inc.

Site controller 400 may be in direct communication with octane sensors 102,202 to carry out the functions described above. Alternatively, site controller 400 may obtain octane level information indirectly from other installed components. Widely available underground tank electronic tank gauges or level sensors ("ETG") 500 (Fig. 1A) such as the TLS-350 series available from the Veeder-Root subsidiary of the Danaher Corporation may be provided with octane sensing capability and interfaced with site controller 400. The TLS-350 model uses a capacitance-type probe to determine liquid levels in the underground tank. When used with the present invention, the probes may also be outfitted with at least one real time octane sensor. The ETG would be programmed to poll third and fourth octane sensors 102,202 (Fig. 1) periodically via signal lines 104a,204a and provide octane level information to site controller 400 via signal lines 104b,204b. Alternatively, the ETG 500 may monitor tank liquid level for an increase indicative of a fuel delivery and detect octane levels at that time. Also, octane levels may be monitored from offsite locations either directly via a link with the ETG or from site controller 500 using information supplied from the ETG. It will be readily understood that any alarm condition generated by the ETG, dispenser controller or site controller may be transmitted to an offsite location via a phone dial up connection or satellite link. The Veeder-Root system described above provides a well-known capability for offsite monitoring of alarm conditions.

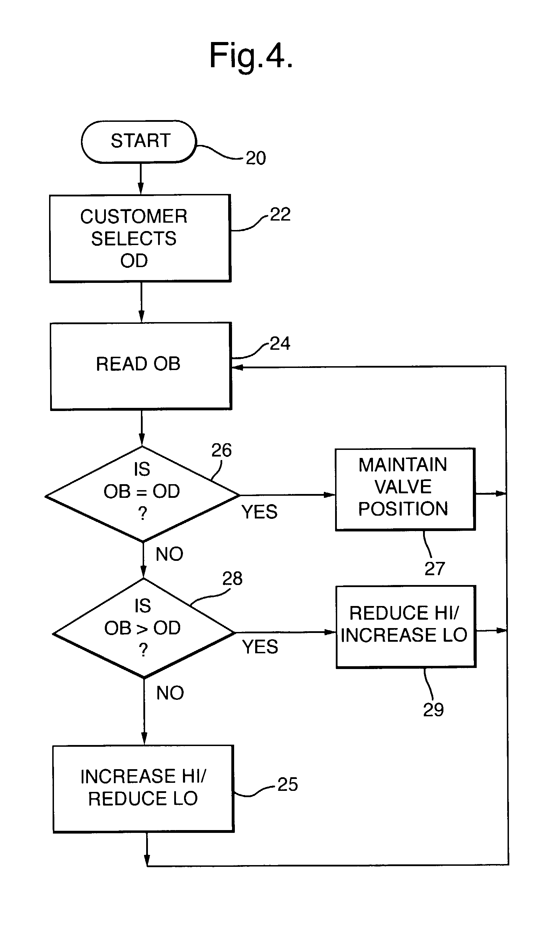

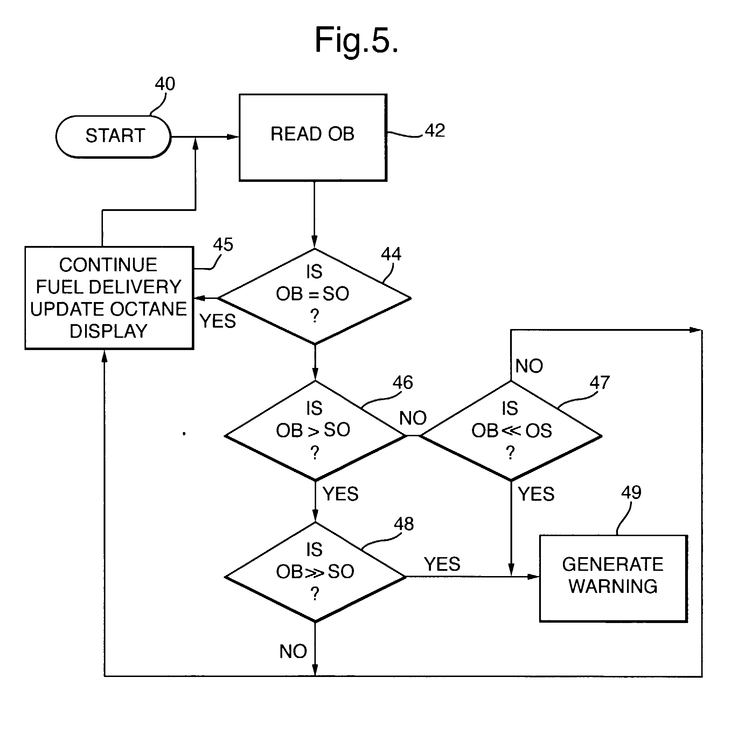

Note, octane sensors 310, 312 or 314 are not necessary to the performance of the above described embodiments. Alternative embodiments will now be described which utilise these other octane sensors with additional reference to figures 4 and 5, where the "SO" is additionally used to refer to the octane level of the product selected by a customer.

Referring now to Fig. 4, the blend control process is entered at 20 and proceeds to 22 where the customer selects the fuel and the octane level to be delivered. In this example, the mid-octane product has been selected. Next, as fuel delivery begins, dispenser electronics 350 reads the octane level of the blended product using the blend octane sensor 341. At test 26 OB is compared to OD. If the two values are equal then the routine proceeds to 27 where flow control valves 306,308 are left in their current positions and the routine returns to 24 to read the octane level of the blended product again. It should be understood that at test 26 the values of OB and OD need not be identical to satisfy the test. There may be room for a small amount of variants between the two values while still satisfying the tests due to instrument error and as may be allowed by regulatory authorities.

If test 26 answers no, then the routine proceeds to test 28 where OB is again compared to OD to determine whether OB is greater than OD. If this test answers yes, then the routine proceeds to 29 where flow control valves 306,308 are controlled to either reduce the amount of high octane blended component or increase the amount of low octane blending component making up the blended product. Either action may be used singly or in combination to correct the octane level of the blended product. If test 28 answers no, then the routine proceeds to 25 where flow control valves 306,308 are controlled to increase the amount of high octane blending component and/or reduce the amount of low octane blending component being supplied.

An alternative embodiment is described in the flow chart shown in Fig. 5. The process here starts at 40 and proceeds to 42 where dispenser electronics 350 reads the output of blend octane sensor 341. At the same time SO is read from a memory location. At test 44 OB is compared to SO. If the two values are not equal the routine proceeds to test 46 where OB is again compared to SO to determine whether OB is greater than SO. If this test answers no, then the routine proceeds to 47 where it is determined whether the value of OB is so far below that of SO as to exceed a predetermined limit. This difference between the values could relate to the tolerance and octane level permitted by regulatory authorities. If this test answers no, then the routine proceeds to block 45. If this test answers yes, then the routine proceeds to block 49 where a warning to operating personnel is generated. The routine could include the additional step at this point of stopping fuel delivery if OB is too far out of tolerance.
If the result of test 46 is yes, then the routine proceeds to test 48 where it is determined whether the value of OB exceeds the value of SO by a predetermined amount. If this test answers yes, then the routine proceeds to block 49 as described above. If this test answers no, then the routine proceeds to block 45 which permits the fuel delivery to continue but updates the octane display for the customer to show that an octane level higher than that selected is being provided. The system could also incorporate memory provided to record all occurrences of a higher octane product being dispensed than was actually selected. A record of such occurrences can be used by regulatory authorities to monitor blending performance and also may be used by operators to make appropriate adjustments.

The present invention may operate either on a stand alone basis or concurrently with other known blending systems. When operating with other systems the present invention may act as a monitor on the octane level of the blended product. Thus when a malfunctioning control valve or meter causes improper blending that cannot be detected by prior art control systems, the present invention can alert operators to the condition. The override feature involves opening or closing control valves beyond the amount specified by a prior art control system. If a maximum amount of override control fails to bring the octane level of the blended product back to within tolerances, the present invention would cease the fueling operation and alert operators.

It will be readily appreciated that the comparison steps described above encompass comparing a measured octane level not only to a single predetermined value but also to a range of values. Given the measurement error inherent in any instrument, it may be feasible to compare the measured octane value to determine whether it falls within a certain range of values. The scope of the present invention includes making the comparison steps described above using either a single point value or an octane range.

Historical information concerning the octane levels of both blending components and blended products may be stored in dispenser electronics 250, site controller 400 or other storage device for compliance monitoring by weights and measures authorities. These authorities may monitor octane levels from a remote location via a communications link with site controller 400. The advantages of such remote monitoring include reduced costs of compliance inspections and the ability to conduct unannounced monitoring checks on octane levels being delivered to the public.

The various components of the system described above may be combined in a variety of ways depending on the desired performance objectives. For example, if costs are a concern, dispenser 300 may be provided with only the blend octane sensor 341 and not with real time octane sensors 310,312 or tank octane sensors 102, 302. The signal from blend octane sensor 341 is used by dispenser electronics 350 along with flow rate information from first and second meters 302,304 to generate output signals to flow control valves 306,308. In this embodiment sensors on the inlet side of first and second meters 302,304 are not required. Conversely, octane monitoring may be conducted only on the inlet side of first and second meters 302,304 using first and second octane sensors 310,312 without monitoring the blended product. It will be readily apparent to one of ordinary skill in the art that octane level sensing may be incorporated into a dispenser blending process by either: 1) monitoring the octane level of the blended product without regard to the octane level of the incoming blend components or 2) monitoring the octane levels of the blend components without regard to the octane level of the blended product.

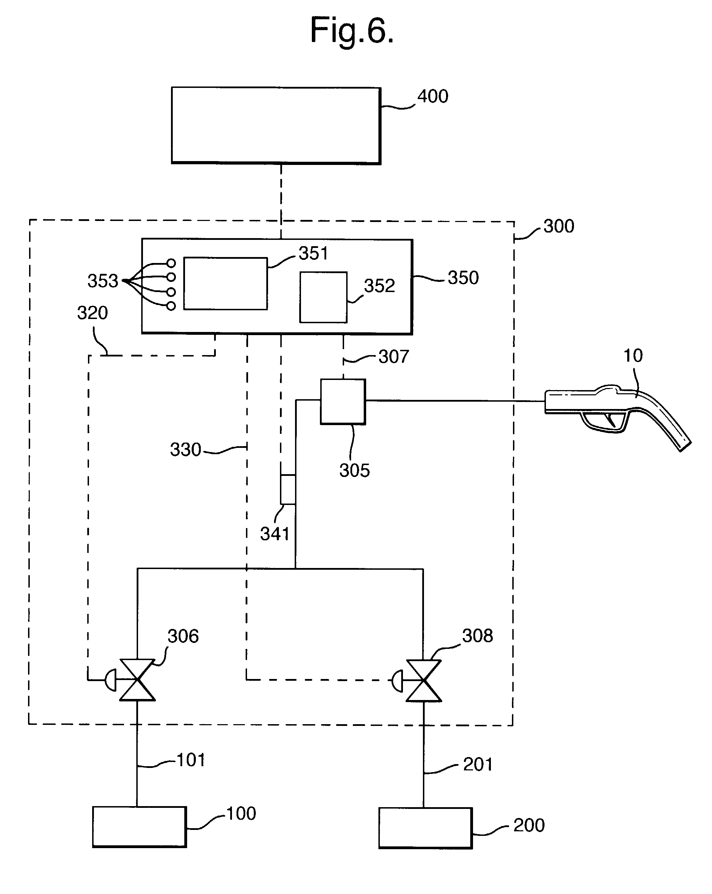

Referring to Figure 6 an embodiment is illustrated employing a single flow meter 305. It will be readily understood that, although octane level display 352 is shown as a separate item in Figure 6, this item may be integrated into customer display 351. The other components of fuel dispenser 300 include first and second flow control valves 306,308 which are in fluid communication with product sources 100,200. Fuel control valves 306,308 are in fluid communication with octane sensor 341 which generates an output signal indicative of the octane level of the blended product. Flow meter 305 is provided downstream of and in fluid communication with octane sensor 341 and provides an electronic signal 307 to dispenser electronics 350 indicative of the flow rate of the product being delivered to nozzle 10. Flow meter 305 may be any type of positive displacement or other type of flow meter well known in the art. Nozzle 10 is connected to dispenser 300 via a flexible hose. Dispenser electronics 350 include a blend controller for receiving the output signal from octane sensor 341 and generating output control signals via control lines 320,330 to flow control valves 306,308 and functions in the same manner as the two meter embodiments described with reference to Figure 1.

The positioning of the meter, flow control valve and octane sensors may vary. The meter may be positioned in an upper structure of a dispenser so as to be closer to a nozzle outlet or may be placed in a lower dispenser body closer to the flow control valves. The meter may or may not be positioned adjacent to either the octane sensors or to the flow control valves, and could be mounted downstream of flow meter 305. The octane sensor location shown in Figure 6 has the advantage that it provides the output signal at an earlier point in the process than would be provided if the sensor was located downstream of flow meter 305.

In an alternative embodiment, at least two multiple octane sensors may be provided in series or in parallel flow to independently sense the octane level of the fuel blend. An averaging function in dispenser electronics 350 may be used to average the multiple octane level readings to determine whether an operational problem exists with one or more of the octane sensors. Dispenser electronics 350 may also evaluate the range of octane level by values provided by the multiple octane sensors as a means to detect an operational problem. If multiple octane sensors are used, they may be of the same type or of different types to provide redundancy enhance reliability into the system. For example, one sensor may be a light source sensor and the other may be an acoustic resonance sensor as described in U.S. patent 5,606,130. Optionally, the dispenser displays 351,352 for an operator station associated with site controller 400 may display the different outputs of the multiple octane sensors.

Dispenser electronics 350, also referred to as control device, may also include a feature wherein the operation of octane sensor 341 is checked for proper operation. If proper operation is not detected, an appropriate message may be displayed at customer/fuel display 351 and/or octane display 352.

Although the present invention has been described with preferred embodiments, it is to be understood that modifications and variations may be utilised within the scope of the appended claims. In particular various embodiments may be combined in a system, for example the features and advantages of a system employing "in tank" octane sensors may also obtain the advantages of employing a single real time octane sensor for monitoring the octane of the blend, with a single meter or two meters depending on a particular requirement.

## Claims

1. A fuel dispensing apparatus comprising:
a) first and second fuel sources (100, 200) for first and second fuels of different octane levels; and
b) a blending system (300) capable of combining first and second fuels to produce at least one blend and including flow control means (306, 308) for controlling the flow of the first fuel relative to the second fuel;
characterised in further comprising:
c) one or more octane sensors (102, 202, 310, 312, 341) for sensing the octane level of at least one of the first fuel, the second fuel or the blend;
d) a controller (350, 400) in electronic communication with the blending system for receiving a signal (104, 204, 314, 316, 342) indicative of the octane level detected by the at least one octane sensor and controlling the blending system in dependence thereon; and
e) a fuel dispenser (300) through which the at least one blend is dispensed.

2. The apparatus of Claim 1 comprising first and second octane level sensors (102, 302 or 310, 312) for measuring first and second fuel octane levels and generating output signals indicative of the first and second fuel octane levels respectively; wherein the controller (350, 400) controls the dispensing of the at least one blend based on the measured octane levels of the first and second fuels.

3. The apparatus of Claim 2 wherein the controller (350, 400) determines whether the at least one blend may be created based on the octane levels of the first and second fuels and permits fuel dispensing only if the at least one blend may be created.

4. The apparatus of Claim 2 or 3 wherein the controller generates an alarm if the at least one blend cannot be created based on the octane levels of the first and second fuels.

5. The apparatus of any one of Claims 2 to 4 wherein the first and second octane sensors (310, 312) are located within the fuel dispenser (300).

6. The apparatus of any one of Claims 2, 3 or 4 wherein the first and second fuel sources are first and second fuel tanks (100, 200) and the first and second octane level sensors (102, 202) are located in the first and second fuel tanks respectively

7. The apparatus of any preceding claim further comprising an electronic tank gauge system in electronic communication with the at least one octane level sensor and with the controller.

8. The apparatus of any one of Claims 2 to 5 wherein the blending system comprises a blend manifold (340) and first and second valves (306, 308) for controlling the flow of the first and second fuels to the blend manifold, the apparatus further comprising first and second meters (310, 312) for detecting the flow of the first and second fuels, and first and second real time octane level sensors for detecting the octane levels of the first and second fuels entering the blend manifold (341), wherein the controller (350, 400) controls the first and second valves (306, 308) in dependance on signals received from the first and second meters (302, 304) and said first and second real time octane sensors (310, 312) so as to maintain the blend at a predetermined level.

9. The apparatus of any preceding claim comprising a blend octane sensor (341) for detecting the octane level of the blend.

10. The apparatus of Claim 9, wherein the blending system comprises a blend manifold (340) and first and second valves (306, 308) for controlling the flow of the first and second fuels to the blend manifold, and wherein the blend octane sensor (341) is a real time octane sensor for detecting the octane level of the blend exiting the blend manifold, wherein the controller (350, 400) controls the first and second valves in response to signals from the blend octane sensor to maintain the blend at a predetermined octane level.

11. The apparatus of Claim 10 further comprising first and second meters (302, 304) for detecting the flow of the first and second fuels, wherein the controller controls the first and second valves in response to signals from the blend octane sensor (341) and the first and second meters.

12. The apparatus of Claim 10 further comprising a meter (305) for providing an indication of the quantity of blend passing through the meter to a fuel outlet.

13. The apparatus of Claim 10 or 12 comprising at least two blend octane sensors (341), wherein the controller averages the octane level obtained from the blend octane sensors.

14. The apparatus of Claim 10, 12 or 13 wherein the controller (350, 400) controls the duration of flows through the first and second valves (306, 308).

15. The apparatus of Claim 14 wherein the controller causes one valve to be open when the other is closed and vice versa.

16. The apparatus of Claim 10 or any of Claims 12 to 15 wherein the controller saves a plurality of octane level measurements in a memory device and determines an average value of the plurality of octane level measurements.

17. The apparatus of Claim 15 wherein the controller determines if the real time octane sensor (341) is operating properly.

18. The apparatus of any preceding claim wherein the at least one fuel dispenser includes an octane display (352).

19. The apparatus of Claim 16 wherein the octane display (352) displays the actual octane of the blend.

20. The apparatus of any preceding claim wherein the controller is a site controller (400) for controlling a plurality of dispensers.

21. The apparatus of any preceding claims wherein the controller (350) is comprised in the fuel dispenser (300).

22. The apparatus of any preceding claim wherein the blending system is located in the fuel dispenser (300).

23. The apparatus as claimed in any preceding claim wherein the fuel dispenser (300) is a retail fuel dispenser for apparatus on a service station forecourt.

24. A method for controlling the dispensing of a low octane fuel and a high octane fuel to create at least one fuel grade, which can be a blend, the method comprising:
a) determining the octane level of the low octane fuel source;
b) determining the octane level of the high octane fuel source;
c) comparing the octane levels determined in steps a) and b) to predetermined levels for each fuel source;
d) controlling the dispensing in dependance on the result of step c).

25. The method of Claim 24 wherein step d) comprises:
d1) determining which of the at least one fuel grade may be created using the results of comparison of step c); and
d2) permitting only the dispensing of each fuel grade that the result of comparison of step c) indicates may be created.

26. The method of Claim 24 or 25 wherein step d) comprises:
d1) providing the results of comparison of step c) to the fuel dispenser blending system; and
d2) modifying the operation of the blending system as needed depending on the results of step d1).

27. The method of Claim 25 to 26 further comprising ceasing fuel dispensing if the comparison of step c) indicates that the desired fuel grade cannot be created.

28. The method of Claim 25 or 27 further comprising generating an alarm if the comparison of step c) indicates that the desired fuel grade cannot be created.

29. A method for blending fuel comprising the steps of:
extracting first and second fuels from a first and second fuel source respectively; passing all fuel extracted from first and second fuel sources through a single meter; and
passing all fuel extracted from the single meter through an octane sensor capable of generating a signal indicative of the octane level of a mixture of the first and second fuels; and
controlling the amount of fuel from first and second fuel sources to maintain the mixture at a predetermined octane level.

30. The method of Claim 31, wherein the fuel extraction from the first and second fuel sources is controlled by first and second valves respectively before metering, and the controlling includes controlling the first and second valves to control the amount of fuel from the first and second fuel sources responsive to the octane level signals.
